# EUROPEAN PATENT APPLICATION

(11) **EP 3 220 578 A1**
(43) Date of publication of application: **20.09.2017**
(21) Application number: 17157367.8
(22) Date of filing: 22.02.2017
(51) Int. Cl.: H04L 12/18

(54) **REMOTE COMMUNICATION SYSTEM, TERMINAL, AND TERMINAL COORDINATION METHOD**

(30) Priority: 18.03.2016 JP 2016054593
(71) Applicant: Ricoh Company, Ltd., Tokyo 143-8555 (JP)
(72) Inventor: HOMMA, Takeshi, Tokyo 143-8555 (JP); HASEGAWA, Takashi, Tokyo 143-8555 (JP); SHIRO, Hideki, Tokyo 143-8555 (JP)
(74) Representative: Schwabe - Sandmair - Marx

(57) **Abstract**

A remote communication system includes: a first communication terminal (ET) configured to establish a call session for transmitting and receiving at least audio with a target communication terminal (10aa, 10ab, 10ba, 10bb), and to communicate with the target communication terminal; and a second communication terminal (GT) configured to utilize a resource of the first communication terminal. One of the first communication terminal and the second communication terminal presents code information to start coupling the first communication terminal and the second communication terminal for coordination. Upon detecting that the code information that has been received is identical to the code information that has been presented, the first communication terminal and the second communication terminal are coupled for the coordination. The second communication terminal makes a request for a given coordinative operation to the first communication terminal, and the first communication terminal performs the given coordinative operation in response to the request.

## Description

### BACKGROUND OF THE INVENTION

### 1. Field of the Invention

The disclosures herein generally relate to a remote communication system, a terminal, and a terminal coordination method.

### 2. Description of the Related Art

Remote communication such as videoconferencing is widely utilized in accordance with advanced network environments.

Various information processing devices are used as client terminals in remote communication systems, in accordance with great progress in information processing technologies. Not only exclusive terminals used for videoconferencing but also Personal Computers (PCs), smartphones, tablet terminals, and electronic whiteboards are used as client terminals in remote communication systems.

In such circumstances, users are able to select devices from various information processing devices according to their preferences to perform remote communication.

Japanese Unexamined Patent Application Publication No. 2014-75074 discloses a method for authenticating a user with user identification information, and acquiring destination list information for each user, instead of destination list information associated with a transmission terminal, for purpose of customizing the transmission terminal easily and quickly for each user. In such a method, the destination list of each user can be used on a shared terminal, but the destination list of each user cannot be seen by other users.

### SUMMARY OF THE INVENTION

In one embodiment, a remote communication system includes a first communication terminal configured to establish a call session for transmitting and receiving at least audio with a target communication terminal, and to communicate with the target communication terminal; and a second communication terminal configured to utilize a resource of the first communication terminal. A first one of the first communication terminal and the second communication terminal presents code information to start coupling the first communication terminal and the second communication terminal for coordination. A second one of the first communication terminal and the second communication terminal acquires the code information, and transmits to the first one of the first communication terminal and the second communication terminal the code information that has been acquired. The first one of the first communication terminal and the second communication terminal receives the code information, and starts coupling the first communication terminal and the second communication terminal for the coordination in response to detecting that the code information that has been received is identical to the code information that has been presented. The second communication terminal makes a request for a given coordinative operation to the first communication terminal, and the first communication terminal performs the given coordinative operation in response to the request.

Therefore, in one embodiment, advantages of the exclusive terminals and the general terminals are utilized concurrently.

### BRIEF DESCRIPTION OF THE DRAWINGS

FIG. 1 is an example of a system configuration view of a remote communication system;
FIG. 2 is an example of a hardware configuration view of the remote communication terminal;
FIG. 3 is an example of a hardware configuration view of the remote communication management system in one embodiment of the present invention;
FIG. 4 is an example of a functional block diagram of terminals, devices, and systems included in the remote communication system;
FIG. 5 is an example of a functional block diagram of an external input device;
FIG. 6 is an example of a functional block diagram of a general-purpose terminal;
FIG. 7 is a first sequence chart of a process example in one embodiment;
FIG. 8 is a second sequence chart of a process example in one embodiment;
FIG. 9 illustrates an example of a screen display of an exclusive terminal;
FIG. 10 illustrates an example of information embedded in a code image;
FIG. 11A and FIG. 11B illustrate examples of the screen display on a general terminal;
FIG. 12A and FIG. 12B illustrate examples of a coordination request and a coordination approval or denial response;
FIG. 13 is a third sequence chart of a process example in one embodiment;
FIG. 14 illustrates an example of a screen display on the general terminal;
FIG. 15 illustrates an example of a screen display on an exclusive terminal;
FIG. 16 illustrates information flow in a case where the process to be performed by the general terminal is performed by the Web server in lieu of the general terminal; and
FIG. 17 is a fourth sequence chart of a process example in one embodiment.

### DESCRIPTION OF THE PREFERRED EMBODIMENTS

In a previously described remote communication system, various information processing devices can be used for client terminals in remote communication. Terminals exclusively used for remote communication (hereinafter, referred to as "exclusive terminal") and terminals having general purposes (hereinafter, referred to as "general terminal") are different in quality, operation performance, usability, etc.

It is a general object of at least one embodiment of the present invention to provide a remote communication system, a terminal, and a terminal coordination method. Advantages of the exclusive terminals and the general terminals are utilized concurrently.

In the following, embodiments of the present invention will be described with reference to the accompanying drawings.

### <Configuration>

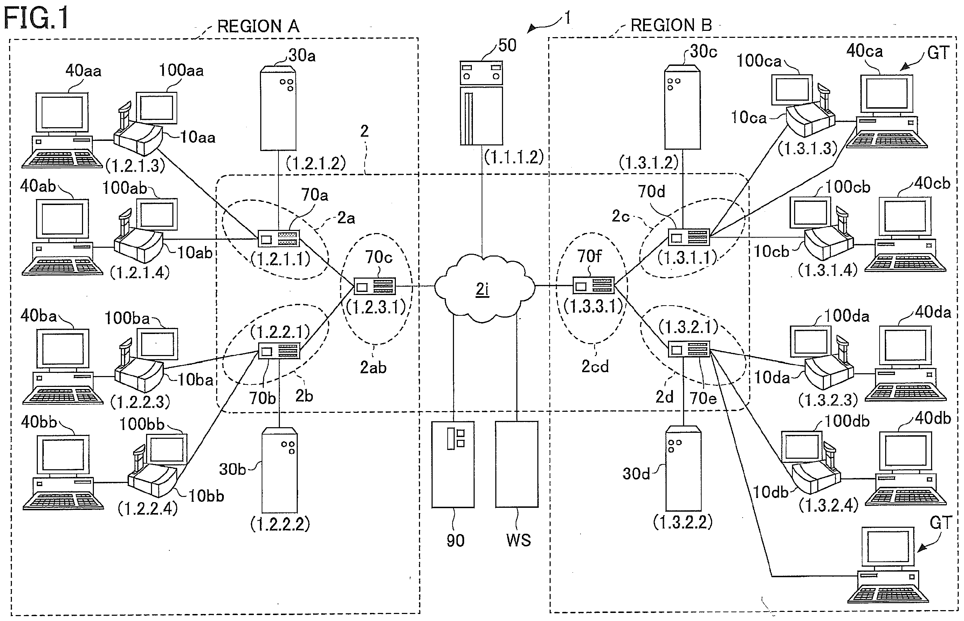

FIG. 1 is an example of a system configuration view of a remote communication system. Firstly, the system outline will be described. A remote communication system 1 includes remote communication terminals 10 (10aa, ... 10ca, ... ), relays 30 (30a, ..., 30c, ... ), and a remote communication management system 50. The remote communication terminals 10 are client terminals that establish remote communication. The remote communication terminals 10 transmit and receive audio data and video data through the relays 30 in the remote communication. Such client terminals include a client terminal dedicated for remote communication that is coupled to the remote communication management system 50 through terminal authentication, and a general-purpose communication terminal, such as a PC and a smartphone, that has been authenticated through user authentication. Users who have logged in through the user authentication by using general-purpose communication terminals are allowed to utilize the remote communication in the same manner as the client terminal. Terminal IDs (e.g., accounts) are also managed and used in the same manner.

Separately from the client terminals, there are external input devices 40 (40aa, ... , 40ca, ...) that provide the client terminals with document screen data. The external input devices 40 are capable of sharing information with the other client terminals. For example, screen data created by a document application that runs on the external input device 40 is provided to the remote communication terminal 10 that is coupled, so that the document screen can be displayed on a terminal with which the remote communication terminal 10 is in communication. Further separately from the above terminals, any communication terminals that perform only call control or address book management and that do not provide functionalities of the remote communication may be coupled to the remote communication system. The general terminals GT are not used for establishing the remote communication. However, the general terminal GT can be used for making an operation for designating a destination included in an address book, while utilizing resources of the remote communication terminal 10. The general terminal GT may also serve as the external input device 40. In FIG. 1, the external input device 40ca also serves as the general terminal GT. In addition, a Web server WS is coupled to the Internet 2i. The Web server WS provides the general terminals GT and the remote communication terminals 10, which are exclusive terminals ET for allowing the general terminals GT to utilize the resources of the remote communication terminals 10, with a Web application used for settings for coupling the general terminals GT and the remote communication terminal 10 for coordination. The Web server WS may be operated on any one of the remote communication terminals 10.

The remote communication management system 50 provides interfaces necessary for providing the terminals with destination lists, transmitting destination list registration requests and receiving approval or denial from the terminals, and holding and updating destination list registration request approval and denial information in services performed in the remote communication system and registration request approval and denial information between the services managed by administrators.

In more detail, the remote communication system is divided into a region A and a region B, as an example. Although the remote communication terminals 10 are located in the two regions, the remote communication is enabled with at least two remote communication terminals.

The remote communication system 1 includes a plurality of remote communication terminals 10aa, 10ab, ..., and 10db, displays 100aa, 100ab, ..., and 100db, a plurality of relays 30a, 30b, 30c, and 30d, a remote communication management system 50, a program providing system 90, and external input devices 40. The displays 100aa, 100ab, ..., and 100db are respectively provided for the plurality of remote communication terminals 10aa, 10ab, ..., and 10db. In the present embodiment, any one of the remote communication terminals 10aa, 10ab, ..., and 10db is referred to as "remote communication terminal 10". Any one of the displays 100aa, 11ab, ..., and 100db is referred to as "display 100". Any one of the relays 30a, 30b, 30c, and 30d is referred to as "relay 30". Any one of the external input devices 40aa, 40ab, ..., and 40db is referred to as "external input device 40".

The remote communication terminal 10 transmits and receives data such as audio data and image data to and from another remote communication terminal 10. In the present embodiment, a case where the image data is a video image will be described. However, not only a video image but also a still image is applicable. In addition, the image data may include both a video image and a still image. The relay 30 relays audio data and image data between the plurality of remote communication terminals 10. The remote communication management system 50 manages the remote communication terminals 10 and the relays 30 in an integrated fashion.

The external input device 40 is coupled to the remote communication terminal 10. The external input device 40 transmits display data for displaying document data to the remote communication terminal 10. Herein, the document data means, for example, data used in software such as word processing software, spreadsheet software, and presentation software.

A plurality of routers (70a, 70b, ... , and 70f) illustrated in FIG. 1 select optimal paths for audio data and image data. In the present embodiment, any one of the routers (70a, 70b, ... , and 70f) is referred to as "router 70".

The program providing system 90 includes a Hard Disk Drive (HDD) in which is stored a remote communication terminal program for enabling the remote communication terminal 10 to perform various functions or various means. The program providing system 90 is capable of transmitting the remote communication terminal program to the remote communication terminal 10. The HDD of the program providing system 90 also stores a relay program for enabling the relay 30 to perform various functions or various means. The program providing system 90 is capable of transmitting the relay program to the remote communication terminal 10. The HDD of the program providing system 90 also stores a remote communication management program for enabling the remote communication management system 50 to perform various functions or various means. The program providing system 90 is capable of transmitting the remote communication management program to the remote communication management system 50.

The remote communication terminal 10aa, the remote communication terminal 10ab, the relay 30a, and the router 70a are coupled to each other through a Local Area Network (LAN) 2a, and are capable of communicating with each other. The remote communication terminal 10ba, the remote communication terminal 10bb, the relay 30b, and the router 70b are coupled to each other through a LAN 2b, and are capable of communicating with each other. The LAN 2a and the LAN 2b are coupled to each other through a dedicated line 2ab to be capable of communicating with each other. The dedicated line 2ab includes the router 70c. The LAN 2a and the LAN 2b are implemented in the region A. For example, the region A is located in Japan. The LAN 2a is implemented in an office in Tokyo. The LAN 2b is implemented in an office in Osaka.

Additionally, the remote communication terminal 10ca, the remote communication terminal 10cb, the relay 30c, and the router 70d are coupled to each other through a LAN 2c, and are capable of communicating with each other. The remote communication terminal 10da, the remote communication terminal 10db, the relay 30d, and the router 70e are coupled to each other through a LAN 2d, and are capable of communicating with each other. The LAN 2c and the LAN 2d are coupled to each other through a dedicated line 2cd to be capable of communicating with each other. The dedicated line 2cd includes the router 70f. The LAN 2c and the LAN 2d are implemented in the region B. For example, the region B is located in the United Sates. The LAN 2c is implemented in an office in New York City. The LAN 2d is implemented in an office in Washington D.C. The region A and the region B are respectively coupled to each other between the router 70c and the router 70f through the Internet 2i, and are capable of communicating with each other.

The remote communication management system 50 and the program providing system 90 are coupled through the Internet 2i to the remote communication terminals 10 and the relays 30. The remote communication management system 50 and the program providing system 90 may be arranged in one of the region A and the region B. The remote communication management system 50 and the program providing system 90 may be arranged in any other region. In the present embodiment, a communication network 2 is implemented by including the LAN 2a, the LAN 2b, the dedicated line 2ab, the Internet 2i, the dedicated line 2cd, the LAN 2c, and the LAN 2d.

In FIG. 1, four numbers are respectively given below the remote communication terminals 10, the relays 30, the remote communication management system 50, the routers 70, and the program providing system 90. Such four numbers simply represent IP addresses of the commonly used IPv4. For example, "1.2.1.3" is the IP address of the remote communication terminal 10aa. Instead of IPv4, IPv6 may be used, but IPv4 is used herein for simplifying the description.

### <Hardware Configuration>

Next, the hardware configuration of each device will be described. In the present embodiment, a case where a delay occurs in receiving image data by a remote communication terminal 10 serving as a relay destination will be described. In this case, the relay 30 changes the resolution of the image in the image data, and then transmits the image data to the remote communication terminal 10 serving as the relay destination.

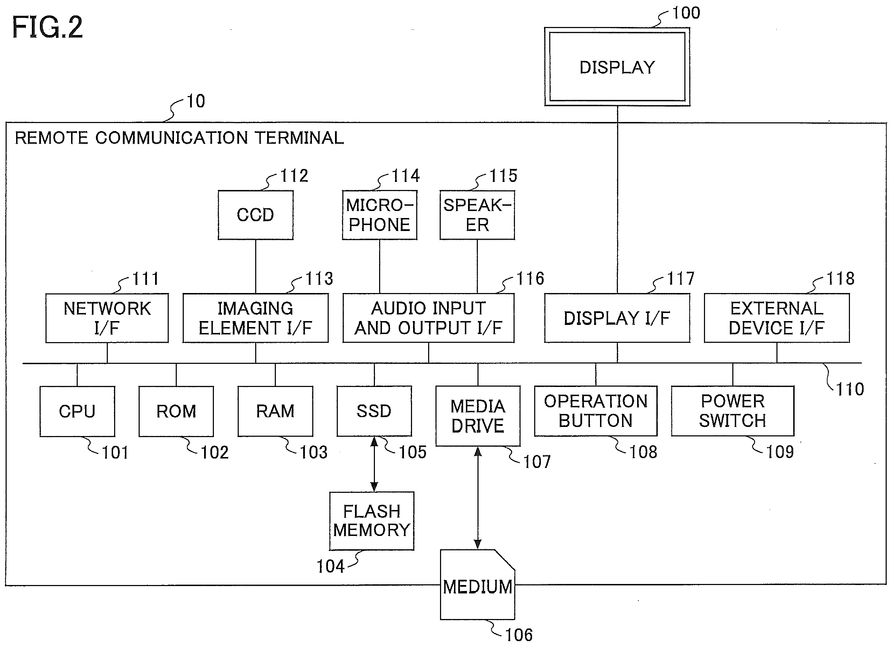

FIG. 2 is an example of a hardware configuration view of the remote communication terminal 10. As illustrated in FIG. 2, the remote communication terminal 10 in the present embodiment includes a Central Processing Unit (CPU) 101 that controls the overall operation of the remote communication terminal 10, a Read Only Memory (ROM) 102 that stores a remote communication terminal program, a Random Access Memory (RAM) 103 used as a work area of the CPU 101, a flash memory 104 that stores various data including audio data and image data, a Solid State Drive (SSD) 105 that controls reading data from the flash memory 104 and writing data into the flash memory 104 in response to control from the CPU 101, a media drive 107 that controls reading data from a recording medium 106 such as a flash memory and writing (storing) data into the recording medium 106, an operation button 108 that is operated when a destination of the remote communication terminal 10 is selected, a power supply switch 109 that switches between ON and OFF of the power of the remote communication terminal 10, a network interface (I/F) 111 that transmits data through the communication network 2, a Charge Coupled Device (CCD) 112 that captures an image of a subject in response to control from the CPU 101 to acquire image data, an imaging element I/F 113 that controls driving of the CCD 112, a microphone 114 to which sounds are input, a speaker 115 from which sounds are output, an audio input and output I/F 116 that processes input and output of audio signals between the microphone 114 and the speaker 115 in response to control from the CPU 101, a display I/F 117 that transmits the image data to an externally attached display 100 in response to control from the CPU 101, an external device I/F 118 that transmits and receives various data to and from an external device, and a bus line 110, such as an address bus or a data bus, that electrically couples the above-described component elements, as illustrated in FIG. 2.

The recording medium 106 is detachable from the remote communication terminal 10. The recording medium 106 is not limited to the flash memory 104. Any non-volatile memory that reads and writes data in response to control from the CPU 101 is applicable to the recording medium 106. For example, Electrically Erasable and Programmable ROM (EEPROM) may be used. The CCD 112 may be a solid-state image sensing element, which converts light into electrical charge to digitize the image (e.g., video image) of a subject. Not only CCD but also any imaging element that captures images of a subject, such as Complementary Metal Oxide Semiconductor (CMOS), may be applicable to the CCD 112. The display 100 includes a liquid crystal or an organic electroluminescence (EL) that displays images of a subject or icons for operation.

The remote communication terminal program may be recorded in a computer-readable recording medium such as the recording medium 106 in an installable or executable file format. Such a computer-readable recording medium may be distributed.

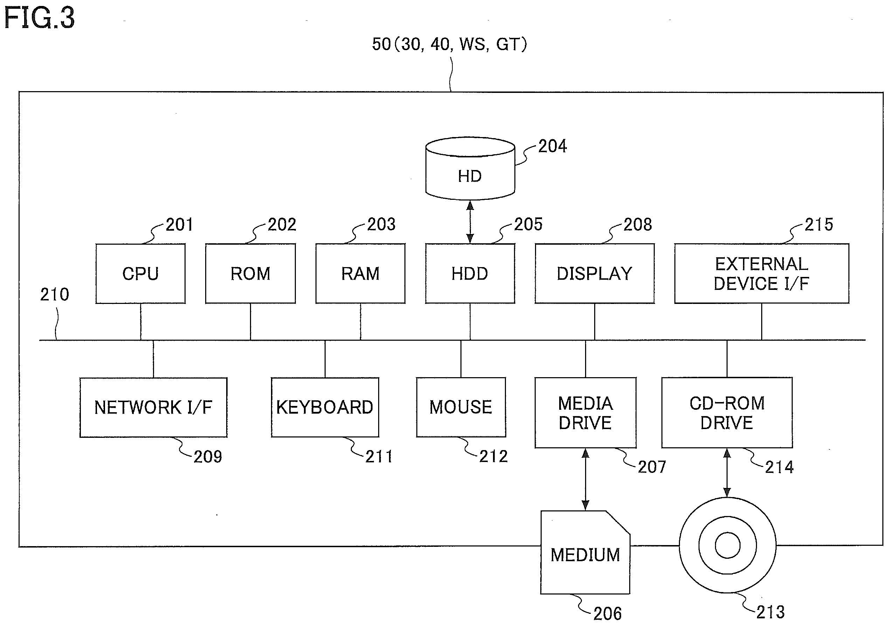

FIG. 3 is an example of a hardware configuration view of the remote communication management system 50 in one embodiment of the present invention. The remote communication management system 50 includes a CPU 201 that controls the overall operation of the remote communication management system 50, a ROM 202 that stores a remote communication management program, a RAM 203 used as a work area of the CPU 201, a Hard Disk (HD) 204 that stores various data, a Hard Disk Drive (HDD) 205 that controls reading various data from the HD 204 and writing various data into the HD 204 in response to control from the CPU 201, a media drive 207 that controls reading data from the recording medium 206 such as a flash memory and writing (storing) data into the recording medium 206, a display 208 that displays various types of information such as a cursor, a menu, a window, a character, an image, etc., a network I/F 209 that transmits data through the communication network 2, a keyboard 211 including a plurality of keys for inputting characters, numerical numbers, various instructions, etc., a mouse 212 used for selection and execution of various instructions, selection of a process target, moving the cursor, etc., a CD-ROM drive 214 that controls reading data from a Compact Disc Read Only Memory (CD-ROM) 213 and writing data into the CD-ROM 213, which serves as an example of a detachable memory medium, an external device I/F 215 that transmits and receives information to and from an external device, and a bus line 210 such as an address bus and a data bus for electrically coupling the above-described component elements, as illustrated in FIG. 3.

The remote communication management program may be recorded in a computer-readable recording medium such as the recording medium 206 or the CD-ROM 213 in an installable or executable file format. Such a computer-readable recording medium may be distributed.

The external input device 40 has a similar hardware configuration to the hardware configuration of the remote communication management system 50. Hence, the detailed description of the external input device 40 is omitted. In the ROM 202, however, an external input device program for controlling the external input device 40 is stored. Also in this case, the external input device program may be recorded in a computer-readable recording medium such as the recording medium 206 or the CD-ROM 213 in an installable or executable file format. Such a computer-readable recording medium may be distributed.

The relay 30 has a similar hardware configuration to the hardware configuration of the remote communication management system 50. The detailed description of the relay 30 is omitted. In the ROM 202, a relay program for controlling the relay 30 is stored. Also in this case, the relay program may be recorded in a computer-readable recording medium such as the recording medium 206 or the CD-ROM 213 in an installable or executable file format. Such a computer-readable recording medium may be distributed.

The program providing system 90 has a similar hardware configuration to the hardware configuration of the remote communication management system 50. The detailed description of the program providing system 90 is omitted. In the ROM 202, however, a program for providing a program for controlling the program providing system 90 is stored. Also in this case, the program for providing the program may be recorded in a computer-readable recording medium such as the recording medium 206 or the CD-ROM 213 in an installable or executable file format. Such a computer-readable recording medium may be distributed.

Other examples of the detachable memory medium may include a Compact Disc Recordable (CD-R), a Digital Versatile Disk (DVD), and a Blu-ray Disc (Registered Trademark). The above-described programs may be stored in such a computer-readable memory medium. Such a computer-readable recording medium may be distributed.

The Web server WS and the general terminal GT have the same hardware configurations as the hardware configuration of the remote communication management system 50. The detailed descriptions of the Web server WS and the general terminal GT are omitted.

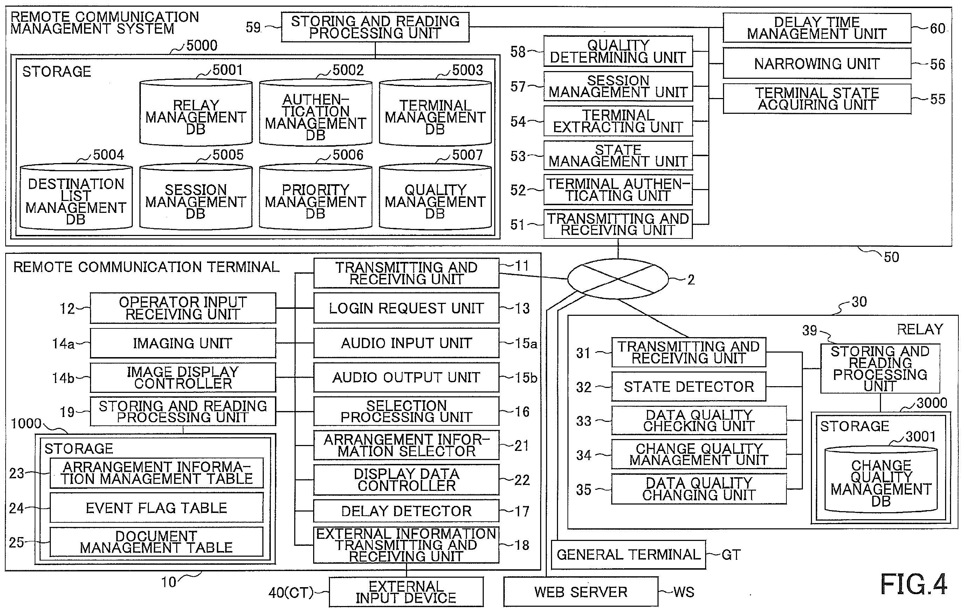

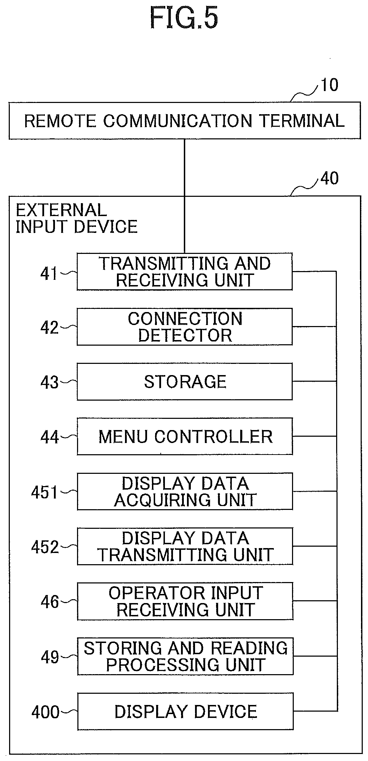

FIG. 4 is an example of a functional block diagram of terminals, devices, and systems included in the remote communication system 1 in the present embodiment. In FIG. 4, the remote communication terminal 10, the relay 30, the remote communication management system 50, the Web server WS, and the general terminal GT are coupled to the communication network 2 to be capable of communicating data through the communication network 2. The external input device 40 is coupled to the remote communication terminal 10 through, for example, a Universal Serial Bus (USB) cable to be capable of communicating data with the remote communication terminal 10. The program providing system 90 illustrated in FIG. 1 is not directly involved in the videoconferencing communication, and the program providing system 90 is not illustrated in FIG. 4, accordingly. In addition, FIG. 5 is an example of a functional block diagram of the external input device 40.

### <Functional Configuration of Remote Communication Terminal>

The remote communication terminal 10 includes a transmitting and receiving unit 11, an operator input receiving unit 12, a login request unit 13, an imaging unit 14a, an image display controller 14b, an audio input unit 15a, an audio output unit 15b, a selection processing unit 16, a delay detector 17, an external information transmitting and receiving unit 18, a storing and reading processing unit 19, an arrangement information selector 21, and a display data controller 22. The above units are functions or means, each of which is enabled by an operation performed by any one of the component elements illustrated in FIG. 2 in response to an instruction from the CPU 201 in accordance with a program stored in the ROM 202.

In a case where the external input device 40 is coupled to the remote communication terminal 10, the external input device 40 acquires the display data, and transmits the acquired display data to the remote communication terminal 10. On receiving the display data, the remote communication terminal 10 transmits the received display data through the communication network 2 to the relay 30.

The remote communication terminal 10 includes a storage 1000. The storage 1000 is configured with any one of the ROM 102, the RAM 103, and the flash memory 104, which are illustrated in FIG. 2. In the storage 1000, an arrangement information management table 23 and an event flag table 24 are stored.

The transmitting and receiving unit 11 of the remote communication terminal 10 is enabled by the network I/F 111 illustrated in FIG. 2. The transmitting and receiving unit 11 transmits and receives various data (i.e., information) through the communication network 2 to and from another terminal, another device, or another system. The operator input receiving unit 12 is enabled by the operation button 108 and the power supply switch 109 illustrated in FIG. 2, and receives various inputs made by a user. For example, when the user switches on the power supply switch 109 illustrated in FIG. 2, the operator input receiving unit 12 illustrated in FIG. 4 receives a power-on instruction, and then powers on the remote communication terminal 10. The login request unit 13 is enabled by an instruction from the CPU 101 illustrated in FIG. 2. On receiving the power-on instruction, the login request unit 13 automatically transmits login request information indicating a login request and a current IP address of the remote communication terminal 10ab from the transmitting and receiving unit 11 through the communication network 2 to the remote communication management system 50.

The imaging unit 14a is enabled by the CCD 112 and the imaging element I/F 113 illustrated in FIG. 2. The imaging unit 14a captures an image of a subject, and outputs the acquired image data. The image display controller 14b is enabled by the display I/F 117 illustrated in FIG. 2. The image display controller 14b controls transmission of the image data to the externally attached display 100. The image display controller 14b displays the image data that has been captured by the imaging unit 14a of the remote communication terminal 10. The image display controller 14b also displays image data that has been captured by the imaging unit 14a of another remote communication terminal 10. In addition, the image display controller 14b displays image data that has been displayed and then captured on a display device 400 of the external input device 40 coupled to the remote communication terminal 10. The image display controller 14b has a function of controlling a displayed area in which image data or display data is displayed.

The audio input unit 15a is enabled by the microphone 114 and the audio input and output I/F 116 illustrated in FIG. 2. The audio input unit 15a receives inputs of user's voices, converts the voices into audio signals, and then outputs audio data of the audio signals. The audio output unit 15b is enabled by the speaker 115 and the audio input and output I/F 116. The audio output unit 15b converts the audio signals of the audio data into voices, and then outputs the converted voices. The audio input unit 15a measures an input level of the audio signal, compares the measured input level with a threshold value, and determines presence or absence of an audio signal.

The arrangement information selector 21 selects a shared flag from the event flag table 24 in accordance with a delivered event of the display data, and sets the shared flag on the arrangement information management table 23. The arrangement information selector 21 gives an instruction including display arrangement information to be displayed on the display 100, to the image display controller 14b.

The selection processing unit 16 performs a final selecting process of selecting one of the plurality of relays 30. Whenever the transmitting and receiving unit 11 receives the preliminary transmission information, the selection processing unit 16 measures the received time and date when the transmitting and receiving unit 11 receives preliminary transmission information. For every piece of the preliminary transmission information whose received time and date has been measured, the selection processing unit 16 calculates a time needed from transmission to reception of the preliminary transmission information in accordance with a difference between the received time and date that has been measured and the transmitted time and date included in the preliminary transmission information. The selection processing unit 16 selects one of the plurality of relays 30 that have relayed the preliminary transmission information, whichever has the shortest time of all of the calculated times. Accordingly, the selection processing unit 16 selects one relay 30, as a result.

The delay detector 17 is enabled by an instruction from the CPU 101 illustrated in FIG. 2. The delay detector 17 detects a delay time (millisecond) of the audio data or the image data that is transmitted through the relay 30 from another remote communication terminal 10. The external information transmitting and receiving unit 18 transmits and receives data to and from the external input device 40 through the external device I/F 215. The storing and reading processing unit 19 performs a process of storing various data in the storage 1000 and a process of reading various data from the storage 1000. The SSD 105 illustrated in FIG. 2 is a substantialized configuration of the storage 1000. The storage 1000 stores terminal identifications (IDs) for identifying the remote communication terminals 10, passwords, relay IDs for identifying the relays 30 that relay audio data, image data, and various data, and IP addresses of destination terminals, for example.

The display data controller 22 acquires display data that is displayed on the external input device 40. The display data controller 22 transmits the acquired display data to the remote communication terminal 10. The display data represents image data in which an image displayed on the screen of the display device 400 is converted into a Joint Photographic Experts Group (JPEG) format or a Bitmap format, or rendering commands in a Graphics Device Interface (GDI) format. The display data may include document data, or may be only a desktop screen without including the document data.

The display data controller 22 gives a display data delivery start request or a display data delivery stop request to the relay 30, in response to a request from the external input device 40. The display data controller 22 refers to the event flag table 24 in response to a delivery event from the relay 30. The display data controller 22 determines a state of a display control flag and transmits the display control flag state to the external input device 40.

The terminal ID and the relay ID in the present embodiment indicate identification information including words, characters, signs, marks, etc., which are respectively used for uniquely identifying the remote communication terminal 10 and the relay 30. The terminal ID and the relay ID may be identification information in which at least two of the words, characters, signs, and marks are combined.

### <Functional Configuration of External Input Device>

As illustrated in FIG. 5, the external input device 40 includes a transmitting and receiving unit 41, a connection detector 42, a storage 43, a display data acquiring unit 451, a display data transmitting unit 452, a menu controller 44, an operator input receiving unit 46, and a storing and reading processing unit 49. The above units are functions or means, each of which is enabled by an operation performed by any one of the component elements illustrated in FIG. 3, in response to an instruction from the CPU 201 in accordance with a program stored in the ROM 202. The external input device 40 includes the display device 400 configured with the display 208 illustrated in FIG. 3. The external input device 40 is equipped with an Operating System (OS) such as Windows OS (Registered Trademark), and thus has a function of running a program when the external input device 40 is coupled to another device, accordingly.

The transmitting and receiving unit 41 of the external input device 40 is enabled by the network I/F 209 illustrated in FIG. 3. The transmitting and receiving unit 41 transmits and receives various data (i.e., information) to and from the remote communication terminal 10. The connection detector 42 detects that data transmission and reception to and from the remote communication terminal 10 is enabled by the external device I/F 215. The operator input receiving unit 46 is enabled by a keyboard or a mouse. The operator input receiving unit 46 receives operator inputs from an operator of the device.

The display data acquiring unit 451 captures the screen of the display device 400 to acquire the display data that is displayed on the external input device 40. The display data transmitting unit 452 transmits the display data that has been acquired by the display data acquiring unit 451 to the remote communication terminal 10.

The storing and reading processing unit 49 performs a process of storing various data in the storage 43 and a process of reading various data from the storage 43. The HDD 205 illustrated in FIG. 3 is a substantialized configuration of the storing and reading processing unit 49. The HD 204 is a substantialized configuration of the storage 43. A document management table 432 and a transition condition table 431 are stored in the storage 43. The display device 400 is enabled by the display 208. The display device 400 displays data on the screen. The menu controller 44 displays on the display device 400 a menu content and a sharing state in accordance with a display control flag.

### <Functional Configuration of General Terminal>

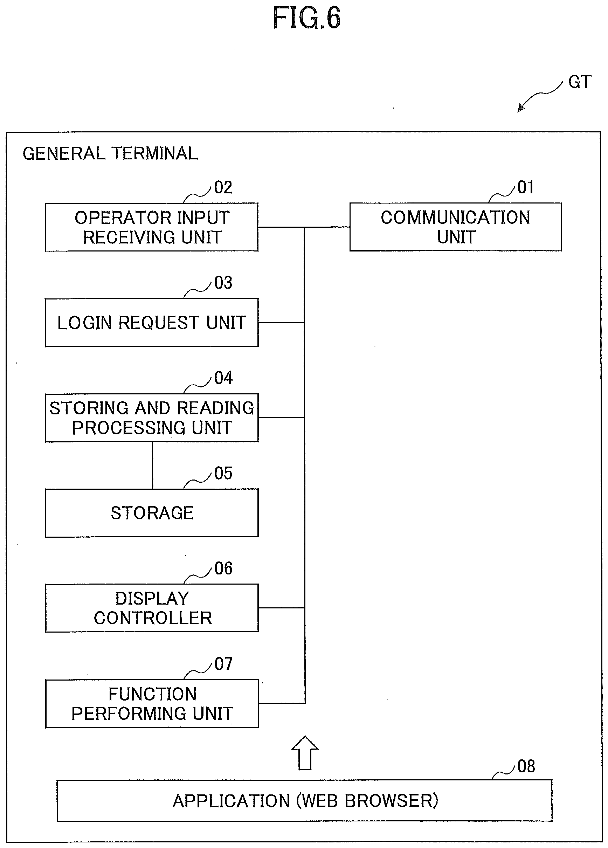

As illustrated in FIG. 6, the general terminal GT includes a communication unit 01, an operator input receiving unit 02, a login request unit 03, a storing and reading processing unit 04, a storage 05, a display controller 06, and a function performing unit 07. The above units are used by a given application 08. The application 08 is, for example, a general-purpose Web browser. The communication unit 01 communicates with another device through networks. The operator input receiving unit 02 receives operator inputs from a user. The login request unit 03 makes a login request to the remote communication management system 50 in response to the user's operation or in accordance with the settings. The storing and reading processing unit 04 refers to data in the storage 05, and updates the data. The display controller 06 controls the screen display on the general terminal GT. The function performing unit 07 performs a given function either autonomously or in response to a request from another device. In a case where the general terminal GT also serves as the external input device 40, the general terminal GT further includes the functions illustrated in FIG. 5.

### <Operation>

### <Outline Operation>

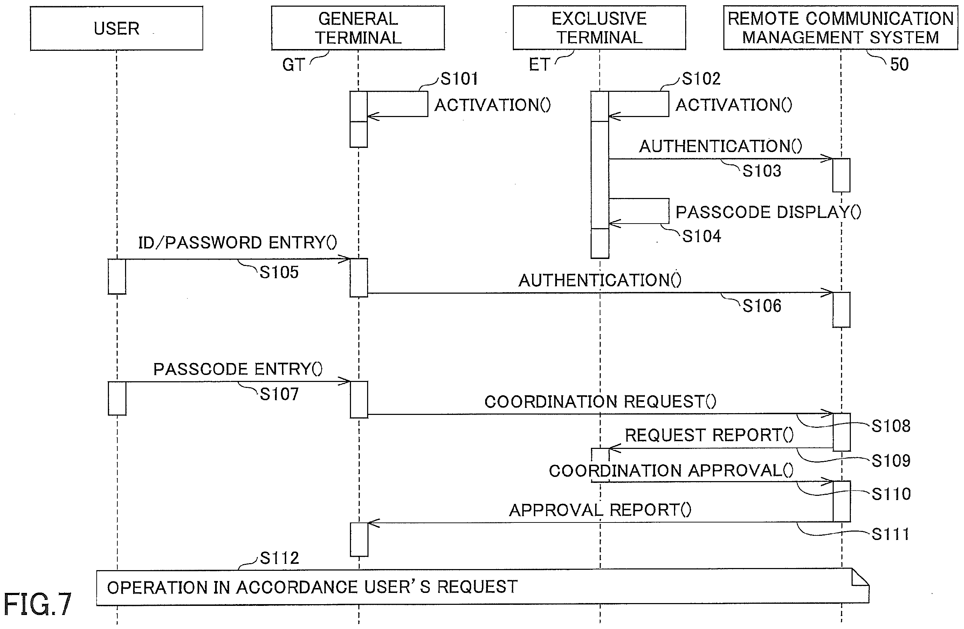

FIG. 7 is a sequence chart of a process example in one embodiment. A general terminal GT and an exclusive terminal ET are located close to each other, and are used by the same user. FIG. 7 illustrates a process example in which the general terminal GT obtains approval to use the exclusive terminal ET (i.e., acquisition of the right to use) and then the general terminal GT utilizes resources of the exclusive terminal ET.

In FIG. 7, both the general terminal GT and the exclusive terminal ET power on and start up (step S101, step S102). The exclusive terminal ET starts an authentication process with the remote communication management system 50, by using the terminal ID of the exclusive terminal ET (step S103).

Then, the exclusive terminal ET displays (renders) a passcode on the screen of the exclusive terminal ET or on a separate display through an external output (step S104). The passcode is provided for starting to couple terminals for coordination, so that a nearby terminal (including the general terminal GT) utilizes the resources of the exclusive terminal ET. Note that the passcode may not be necessarily displayed immediately after the exclusive terminal ET starts up. The passcode may be displayed in response to, for example, a request operation from a user. The passcode may be a one-time passcode that changes every time, but may be a static passcode depending on the intended use.

Additionally, the user enters an ID and a password of a personal account through the general terminal GT in order to use the general terminal GT in the system (step S105). The personal account is authenticated through the general terminal GT by the remote communication management system 50 (step S106). This authentication ensures that the user who is trying to utilize the resources of the exclusive terminal ET is a valid user. The account used for authentication on the general terminal GT is similar to the account used for the exclusive terminal ET or any other general terminal that provides a function of enabling the remote communication. The authentication can be made in a similar manner. However, the extent of permitted authorization may differ. For example, the use of remote communication may be limited for an account that is a non-charging account and that is used only for the coordination.

Then, when the user desires coordination between the general terminal GT and the exclusive terminal ET, the user acquires the passcode being displayed on the screen of the exclusive terminal ET by any means and enters the passcode on the general terminal GT (step S107). The passcode may be acquired by, for example, using a code image such as a QR code (Registered Trademark), using non-contact communication in Near Field Communication (NFC), or the user visually reading the passcode and then manually entering the passcode. A process example of using the code image will be described later.

The general terminal GT makes a coordination request with the entered passcode through the remote communication management system 50 to the exclusive terminal ET (step S108). The remote communication management system 50 receives the coordination request and reports the received coordination request to the exclusive terminal ET (step S109).

The exclusive terminal ET determines whether the passcode being displayed on the exclusive terminal ET matches the passcode that has been received together with the coordination request. On determining that both passcodes are identical to each other, the exclusive terminal ET transmits a coordination approval report through the remote communication management system 50 to the general terminal GT that is a coordination request source (step S110). The remote communication management system 50 receives the coordination approval report, and then transfers the coordination approval report to the general terminal GT that is the coordination request source (step S111).

The above process enables coordination between the general terminal GT and the exclusive terminal ET. A coordinative operation is performed in response to a user's request (step S112). The coordinative operation will be described later in detail.

In the above description, the passcode is displayed on the exclusive terminal ET, and then the passcode is read and entered on the general terminal GT. However, the passcode may be displayed on the general terminal GT, and then the passcode may be read and entered on the exclusive terminal ET.

In the above description, the remote communication management system 50 administers communication between the general terminal GT and the exclusive terminal ET. However, any other server may administer the communication between the general terminal GT and the exclusive terminal ET. Alternatively, the general terminal GT and the exclusive terminal ET may directly communicate with each other.

### <Specific Operation>

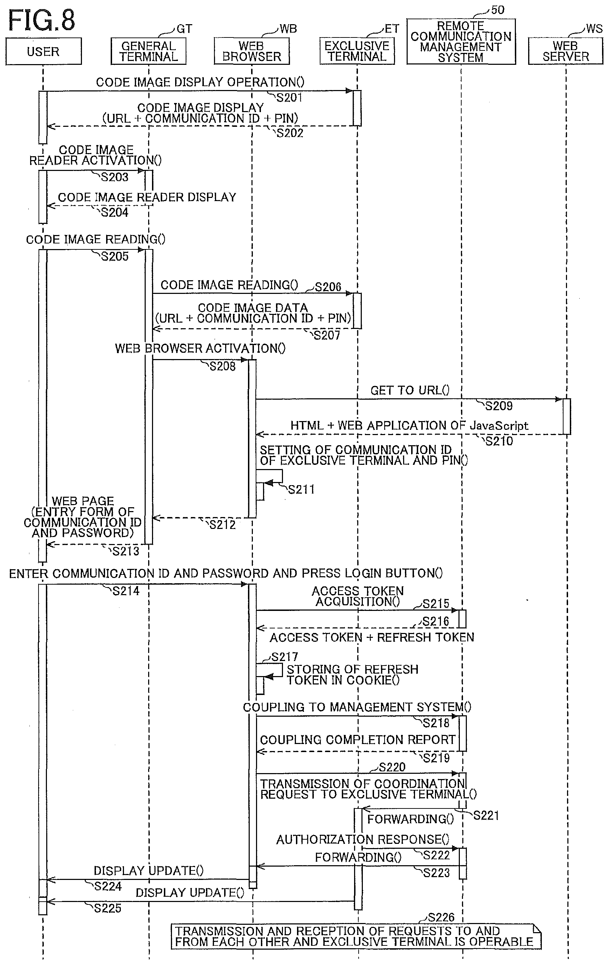

FIG. 8 illustrates a flowchart of the above-described process of FIG. 7 more specifically. A code image to be used is a two-dimensional bar code including a passcode. In addition, a Web application for facilitating the settings is supplied from the Web server WS. Here, it is assumed that the general terminal GT and the exclusive terminal ET have already started up.

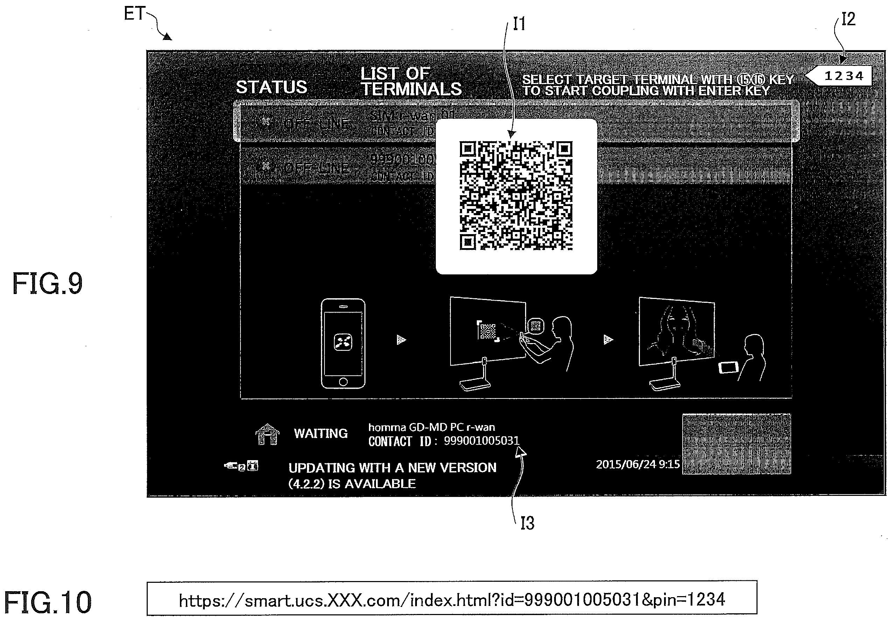

In FIG. 8, the user performs a display operation for displaying the code image on the exclusive terminal ET (step S201). The exclusive terminal ET displays the code image on the screen (step S202). The display operation is performed by, for example, pressing a given button of the exclusive terminal ET. The code image includes a Uniform Resource Locator (URL) of the Web server WS, a communication ID for identifying the exclusive terminal ET, and a Personal Identification Number (PIN). FIG. 9 illustrates a screen example of the exclusive terminal ET. An item I1 of the code image is being displayed slightly above the center. An item I2 of PIN is displayed on the upper right of the screen. The PIN corresponds to a one-time passcode. An item I3 is displayed on the lower side of the screen. FIG. 10 indicates an example of character strings embedded in the code image. A URL starting with "https://" is written, next "?" is written, followed by values of "id" and "pin".

Referring back to FIG. 8, the user activates a code image reader application on the general terminal GT (step S203). The code image reader application is activated and then the screen is displayed (step S204).

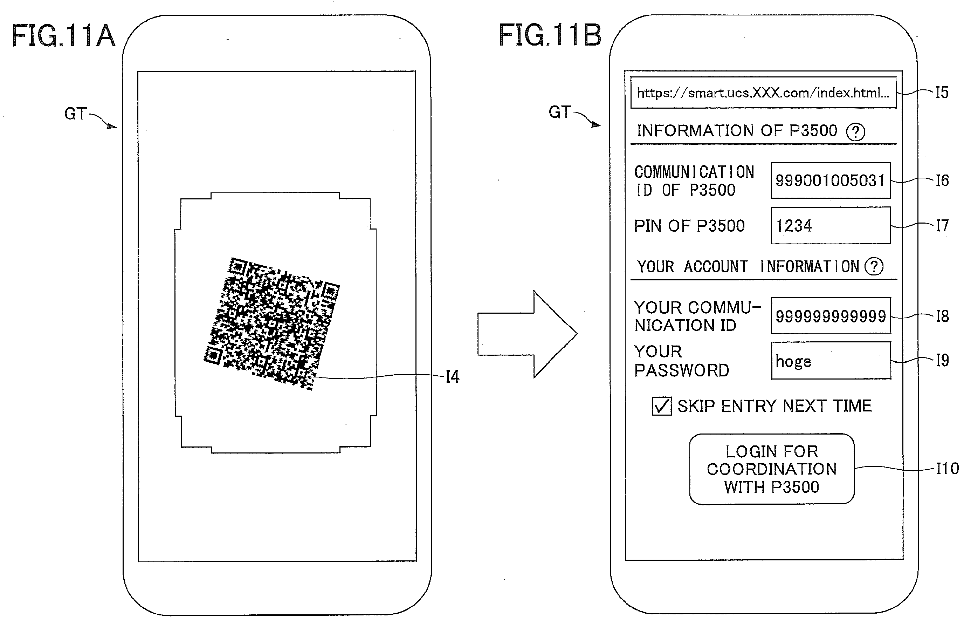

The user performs a code image reading operation on the general terminal GT (step S205). The general terminal GT reads the code image (step S206), and acquires data embedded in the code image (step S207). Note that the reading operation of reading the code image may include automatic reading of the code image by merely causing the camera of the general terminal GT to face the code image, and pressing of a button for the reading operation. Either one of the above-described cases is applicable. FIG. 11A illustrates a state where the code image I4 being displayed on the general terminal GT is captured by a commonly-used code image reader application.

Referring back to FIG. 8, since the URL format is embedded in the code image, the general terminal GT activates a Web browser WB in accordance with the embedded description (step S208). The Web browser WB makes a GET request to the Web server WS designated by the URL embedded in the code image (step S209). In response to the GET request, the Web server WS responds with a Web application including HyperText Markup Language (HTML) and Javascript, with which the setting form is written. The Web browser WB executes the Web application. The Web browser WB sets the communication ID and PIN of the exclusive terminal ET that has been acquired from the code image (step S21). Then, the Web browser WB displays the Web page for the setting form (step S212, step S213).

FIG. 11B illustrates a screen example of the Web application that is being executed by the Web browser WB. A column I5 indicates the URL that is being accessed. A column I6 indicates a preset communication ID of the exclusive terminal ET. A column I7 indicates a preset PIN. Columns I8 and I9 are entered by a user. The columns I8 and I9 are initially blank. The communication ID of the user's personal account is entered in the column I8 and a password is entered in the column I9. In addition, "Skip entry next time" can be checked. A login button I10 is also arranged on the bottom side of the setting form.

In order for the general terminal GT to transmit a request to the exclusive terminal ET, the general terminal GT needs to get authorization from the remote communication management system 50. In this case, the entry fields for entering the ID and password of the account used on the general terminal GT are provided, separately from the entry fields of ID and PIN of the exclusive terminal ET. This configuration allows the authorization from the remote communication management system 50 and the request to the exclusive terminal ET concurrently.

In the above description, the code image is captured with the camera of the general terminal GT to access the Web server WS. However, in a case where the URL of the Web server WS has been informed in advance and registered in a bookmark, for example, such a registered URL may be read into the browser to manually enter the information on the setting form being displayed.

Referring back to FIG. 8, the user enters the user's communication ID and password in the setting form and presses the login button (step S214). Together with the user's communication ID and password, the Web browser WB makes a request for acquiring an access token to the remote communication management system 50 (step S215). Then, the remote communication management system 50 responds with the access token and a refresh token, which include unique character strings with validity periods (step S216). The remote communication management system 50 issues the access token and the refresh token, in response to the request. The access token eliminates re-entry of the communication ID and password at the next access in order to improve simplification and security. The access token is associated with the user's communication ID and password, and has a validity period. The Web browser WB stores the refresh token in a cookie (step S217). The validity period of the refresh token is set longer than the validity period of the access token, and is used when "Skip entry next time" is checked.

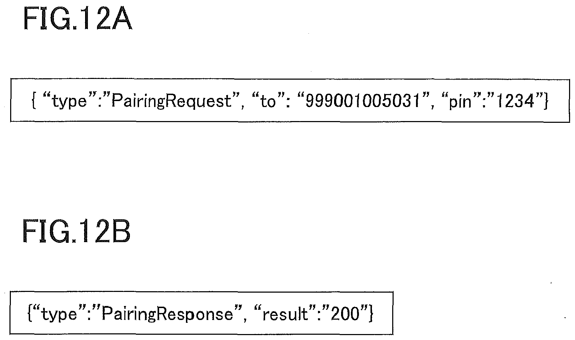

Together with the access token, the Web browser WB is coupled to the remote communication management system 50 (step S218). The remote communication management system 50 responds with a coupling completion report to the Web browser WB (step S219). The Web browser WB transmits to the exclusive terminal ET a coordination request to the exclusive terminal ET through the remote communication management system 50 (step S220). FIG. 12A illustrates a data example of the coordination request. The data example includes "type" that is "PairingRequest" and "to" (destination) that includes the "communication ID" and "PIN" of the exclusive terminal ET.

Referring back to FIG. 8, the remote communication management system 50 forwards the coordination request to the exclusive terminal ET in accordance with the destination included in the coordination request (step S221). The exclusive terminal ET determines whether the communication ID included in the coordination request indicates the exclusive terminal ET and the PIN included in the coordination request matches the PIN that has been already displayed on the exclusive terminal ET (in step S202). In addition, when the communication IDs are identical to each other and the PINs are identical to each other, the exclusive terminal ET sends an authorization response to the remote communication management system 50 (step S222). FIG. 12B illustrates a data example of the authorization response. The data example includes "type" that is "PairingRequest" and "result" that is "200". Here, "200" indicates authorization.

Referring back to FIG. 8, the remote communication management system 50 forwards the authorization response to the Web browser WB (step S223). The Web browser WB and the exclusive terminal ET update the screen display in order to indicate that the coordination (i.e., coupling) request has been authorized (step S224, step S225).

Then, the Web browser WB and the exclusive terminal ET transmit and receive requests to and from each other, so that the exclusive terminal ET can be operated through the Web browser WB (step S226). For example, the general terminal GT transmits the access token held by the general terminal GT to the exclusive terminal ET to transfer the user authority, and the exclusive terminal ET can be operated with the account that has been used for logging in the general terminal GT.

### <Coordinative Operation >

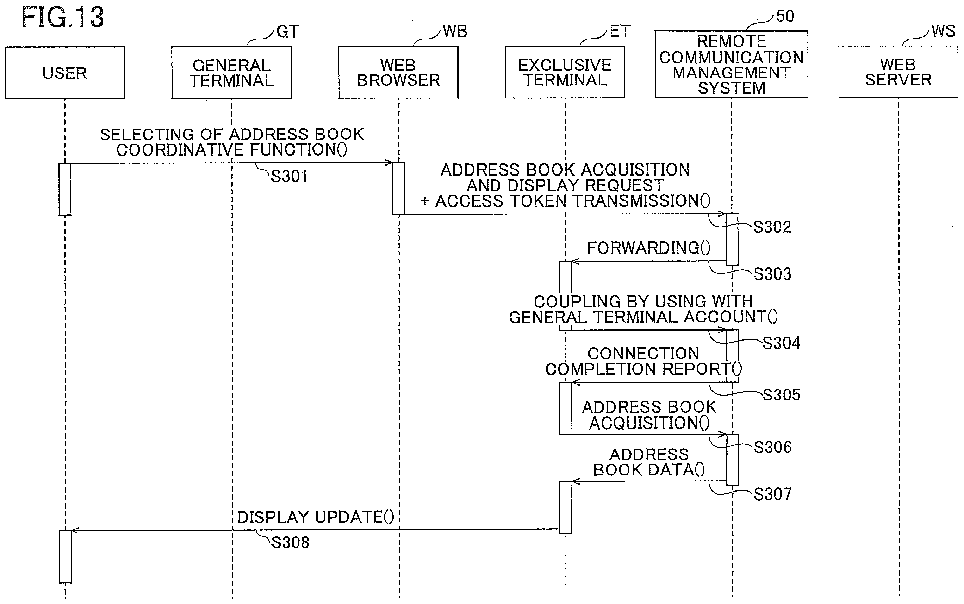

FIG. 13 an example of the process in step S226 of FIG. 8, and is a process example of changing the address book (i.e., destination list) of the exclusive terminal ET to another address book that is linked with the user's personal account.

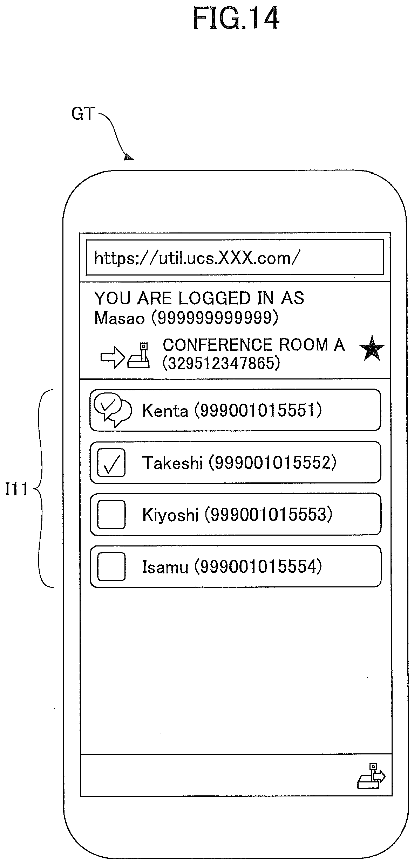

In FIG. 13, the user selects an address book coordinative function on the Web browser WB (step S301). The Web browser WB transmits an address book acquisition and display request together with the access token to the exclusive terminal ET through the remote communication management system 50 (step S302). FIG. 14 illustrates a state where the user's address book is displayed on the general terminal GT. By performing a given operation in this state, the user is able to select the address book coordinative function.

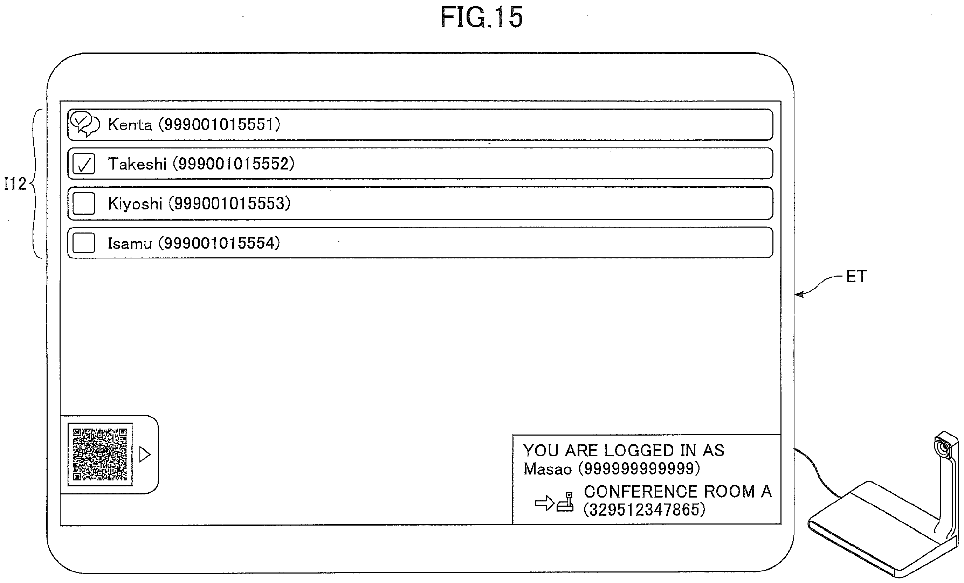

Referring back to FIG. 13, the remote communication management system 50 forwards the received content to the exclusive terminal ET (step S303). On receiving the forwarded content, the exclusive terminal ET makes a coupling request to the remote communication management system 50, by using an account of the general terminal GT (step S304). The account is indicated by the access token. The remote communication management system 50 responds with a coupling completion report (step S305). The exclusive terminal ET makes an address book acquisition request to the remote communication management system 50 (step S306). Then, the remote communication management system 50 transmits the address book data to the exclusive terminal ET (step S307). The exclusive terminal ET updates the address book with the address book data that has been received (step S308). FIG. 15 illustrates a state where the user's address book is being displayed on the exclusive terminal ET. The address book being displayed on the exclusive terminal ET is the same as the address book on the general terminal GT illustrated in FIG. 14.

Then, the user is able to select a desired destination from the address book being displayed on the exclusive terminal ET to start remote communication. The user is also able to select a destination from the general terminal GT by taking advantage of the coordination. The remote communication that starts in this case utilizes the resources in the exclusive terminal ET. This configuration enables transmission of audio and video with high quality.

### <Variations>

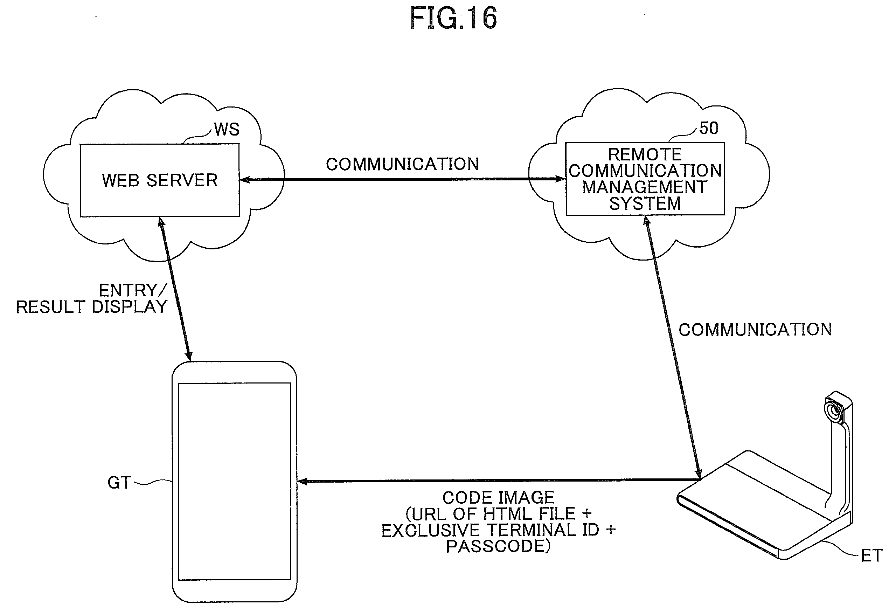

FIG. 16 illustrates an example of information flow in a case where one part of the above process of the general terminal GT is performed by the Web server WS in lieu of the general terminal GT. Specifically, in the processes that have been described in FIG. 7, FIG. 8, and FIG. 13, the general terminal GT is configured to directly communicate with the remote communication management system 50. This configuration sometimes applies a processing load on the general terminal GT. For purpose of reducing the load on the general terminal GT, the Web server WS communicates with the remote communication management system 50. Hence, the general terminal GT merely makes a request to the Web server WS and receives a result of the request. The other processes including the process between the general terminal GT and the exclusive terminal ET and the process between the exclusive terminal ET and the remote communication management system 50 are the same as the processes that have been described above.

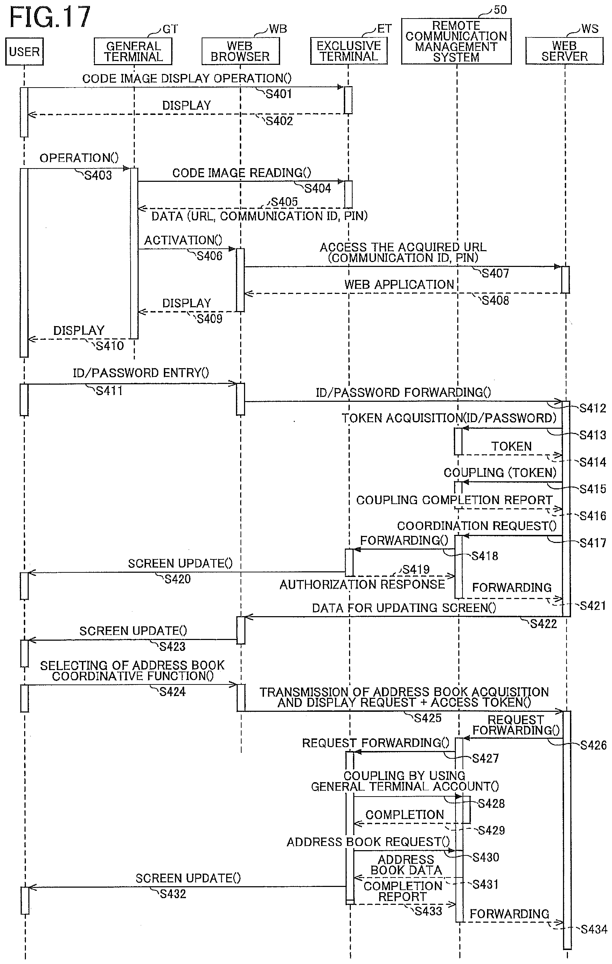

FIG. 17 is a sequence chart of a process example in one embodiment. In FIG. 17, the user performs a display operation for displaying the code image on the exclusive terminal ET (step S401). The exclusive terminal ET displays the code image on the screen (step S402). The display operation is performed by, for example, pressing a given button of the exclusive terminal ET. The code image includes the URL of the Web server WS, and the communication ID and the PIN for identifying the exclusive terminal ET.

Next, the user activates a code image reader application on the general terminal GT to perform a reading operation of reading the code image (step S403). The general terminal GT reads the code image (step S404), and acquires data embedded in the code image (step S405). Note that the reading operation of reading the code image may include automatic reading of the code image by simply causing the camera of the general terminal GT to face the code image, or pressing of a button for the reading operation. Either one of the above-described cases is applicable.

Subsequently, since the URL format is embedded in the code image, the general terminal GT activates the Web browser WB in accordance with the embedded URL (step S406). The Web browser WB makes a GET request to the Web server WS defined by the URL embedded in the code image (step S408). In response to the GET request, the Web server WS responds with a Web application including HyperText Markup Language (HTML) and Javascript, with which the setting form is written (step S410). The Web browser WB performs the Web application, and displays the Web page of the setting form (step S409, step S410).

Then, the user enters the user's communication ID and password in the setting form (step S411). The Web browser WB forwards the user's communication ID and password to the Web server WS (step S412). With the user's communication ID and password, the Web server WS makes a request for acquiring an access token to the remote communication management system 50 (step S413). The remote communication management system 50 responds with the access token (step S414).

Subsequently, together with the access token, the Web server WS is coupled to the remote communication management system 50 (step S415). The remote communication management system 50 responds with a coupling completion report to the Web server WS (step S416). The Web server WS transmits a coordination request to the exclusive terminal ET through the remote communication management system 50 (step S417). The remote communication management system 50 forwards the coordination request to the exclusive terminal ET in accordance with the destination included in the coordination request (step S418). The exclusive terminal ET determines whether the communication ID included in the coordination request indicates the exclusive terminal ET and the PIN included in the coordination request matches the PIN that has already been displayed on the exclusive terminal ET (in step S402). When the communication IDs are identical to each other and the PINs are identical to each other, the exclusive terminal ET makes an authorization response to the exclusive terminal ET through the remote communication management system 50 (step S419). The exclusive terminal ET updates the screen display in order to indicate that the coordination (i.e., coupling) request has been authorized (step S420).

The remote communication management system 50 forwards the authorization response from the exclusive terminal ET to the Web server WS (step S421). The Web server WS transmits data for updating the screen to the Web browser WS (step S422). The data for updating the screen indicates that the coordination (i.e., coupling) request has been authorized. The Web browser WB updates the screen (step S423).

After that, the user selects an address book coordinative function on the Web browser WB (step S424). The Web browser WB transmits an address book acquisition and display request together with the access token to the Web server WS (step S425). The Web server WS forwards the content that has been received to the remote communication management system 50 (step S426). The remote communication management system 50 forwards the content that has been received to the exclusive terminal ET (step S427).

Next, using the account of the general terminal GT indicated by the access token, the exclusive terminal ET makes a coupling request to the remote communication management system 50 (step S428). The remote communication management system 50 responds with the coupling completion report (step S429). Then, the exclusive terminal ET makes an address book acquisition request to the remote communication management system 50 (step S430). The remote communication management system 50 transmits the address book data to the exclusive terminal ET (step S431). The exclusive terminal ET updates the display with the address book data (step S432). The exclusive terminal ET makes a completion report to the remote communication management system 50 (step S433). The remote communication management system 50 forwards the completion report to the Web server WS (step S434).

After that, the user is able to select a desired destination from the address book being displayed on the exclusive terminal ET to start remote communication. The user is also able to select a destination from the general terminal GT by utilizing the coordination.

### <Conclusion>

As described heretofore, in one or more embodiments, advantages of the exclusive terminals and the general terminals are utilized concurrently.

Heretofore, one or more embodiments have been discussed with specific examples. It is apparent that the present invention is not limited to these embodiments, but various variations and modifications may be made without departing from the scope of the present invention. In other words, the detailed descriptions and the accompanied drawings should not be used to limit these embodiments.

### <Corresponding Terms>

The exclusive terminal is an example of a "first communication terminal". The general terminal GT is an example of a "second communication terminal".

The present application claims the benefit of priority of Japanese Patent Application No. 2016-054593 filed on March 18, 2016, the entire contents of which are incorporated herein by reference.

## Claims

1. A remote communication system comprising:
a first communication terminal configured to establish a call session for transmitting and receiving at least audio with a target communication terminal, and to communicate with the target communication terminal; and
a second communication terminal configured to utilize a resource of the first communication terminal,
a first one of the first communication terminal and the second communication terminal presenting code information to start coupling the first communication terminal and the second communication terminal for coordination,
a second one of the first communication terminal and the second communication terminal acquiring the code information, and transmitting to the first one of the first communication terminal and the second communication terminal the code information that has been acquired,
the first one of the first communication terminal and the second communication terminal receiving the code information, and starting coupling the first communication terminal and the second communication terminal for the coordination in response to detecting that the code information that has been received is identical to the code information that has been presented,
the second communication terminal making a request for a given coordinative operation to the first communication terminal, and the first communication terminal performing the given coordinative operation in response to the request.

2. The remote communication system according to claim 1, wherein communication between the first communication terminal and the second communication terminal is performed through a management system of the remote communication system.

3. The remote communication system according to claim 1, wherein communication between the first communication terminal and the second communication terminal is performed by any other device than a management system of the remote communication system or performed directly between the first communication terminal and the second communication terminal.

4. The remote communication system according to any one of claim 1 to claim 3, further comprising:
a server configured to provide screen data of a setting form in which the code information is entered.

5. The remote communication system according to claim 4, wherein an address of the server is included in the code information to access the server in accordance with the code information.

6. The remote communication system according to claim 5, wherein a content of the code information is described as a parameter added to the address.

7. The remote communication system according to any one of claim 4 to claim 6, wherein the server receives a request from the second communication terminal, and performs a process for the coordination in lieu of the second communication terminal in accordance with the request that the server has received.

8. The remote communication system according to any one of claim 1 to claim 7, wherein the code information includes a one-time password whose value is changed whenever the code information is issued.

9. The remote communication system according to any one of claim 1 to claim 8, wherein the second one of the first communication terminal and the second communication terminal acquires the code information by any one of capturing a code image including the code information, receiving the code information by short-range wireless communication, and manual inputting of the code information.

10. A terminal that is a first terminal comprising:
a transmitting and receiving unit configured to establish a call session for transmitting and receiving at least audio to and from a target communication terminal;
a presenting unit configured to present a second terminal that utilizes a resource of the first terminal with code information to start coupling the first terminal and the second terminal for coordination; and
a controller configured to cause the transmitting and receiving unit to start coupling the first terminal and the second terminal for the coordination in response to detecting that the code information that has been acquired and then transmitted from the second terminal is identical to the code information that has been presented by the presenting unit, and to perform a coordinative operation in response to a request for the coordinative operation from the second terminal.

11. A terminal coordination method comprising:
establishing, by a first communication terminal, a call session for transmitting and receiving at least audio with a target communication terminal, and to communicate with the target communication terminal,
presenting, by a first one of the first communication terminal and a second communication terminal, code information to start coupling the first communication terminal and the second communication terminal for coordination, the second communication terminal being configured to utilize a resource of the first communication terminal;
acquiring, by a second one of the first communication terminal and the second communication terminal, the code information, and transmitting to the first one of the first communication terminal and the second communication terminal the code information that has been acquired;
receiving, by the first one of the first communication terminal and the second communication terminal, the code information, and starting coupling the first communication terminal and the second communication terminal for the coordination in response to detecting that the code information that has been received is identical to the code information that has been presented;
making, by the second communication terminal, a request for a given coordinative operation to the first communication terminal; and
performing, by the first communication terminal, the given coordinative operation in response to the request.
